(19) Europäisches Patentamt
European Patent Office
Office européen des brevets

(11) EP 4 316 625 A1

(12) # EUROPEAN PATENT APPLICATION
published in accordance with Art. 153(4) EPC

(43) Date of publication:
**07.02.2024 Bulletin 2024/06**

(21) Application number: **22775257.3**

(22) Date of filing: **15.03.2022**

(51) International Patent Classification (IPC):
***B01D 15/38*** *(2006.01)* ***B01J 20/281*** *(2006.01)*
***B01J 20/285*** *(2006.01)*

(52) Cooperative Patent Classification (CPC):
**B01D 15/38; B01J 20/281; B01J 20/285**

(86) International application number:
**PCT/JP2022/011495**

(87) International publication number:
**WO 2022/202467 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 JP 2021051374**

(71) Applicant: **JSR Corporation
Tokyo 105-8640 (JP)**

(72) Inventors:
- **KOBAYASHI, Kunihiko
Tokyo 105-8640 (JP)**
- **AKIYAMA, Minato
Tokyo 105-8640 (JP)**
- **INOUE, Yukiya
Tokyo 105-8640 (JP)**
- **KIKUCHI, Masahiro
Tokyo 105-8640 (JP)**

(74) Representative: **TBK
Bavariaring 4-6
80336 München (DE)**

(54) **METHOD FOR PRODUCING CARRIER FOR CHROMATOGRAPHIC USE, METHOD FOR PRODUCING CHROMATOGRAPHY COLUMN, AND CARRIER FOR CHROMATOGRAPHIC USE**

(57) To provide a chromatography carrier which exhibits high liquid permeability and an excellent pressure-resistant characteristic during liquid passage. The chromatography carrier production method of the invention includes the following steps 1 and 2: (step 1) a step of providing a solid phase support, wherein the solid phase support provided in step 1 is formed of porous particles on which a ligand has or has not been immobilized; and (step 2) a step of subjecting the solid phase support to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

Fig. 1

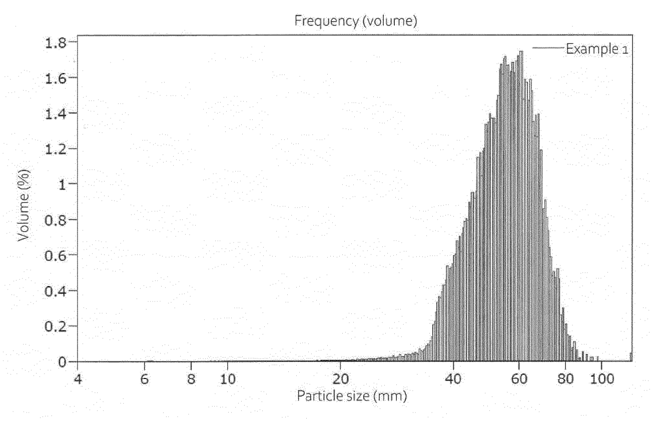




Processed by Luminess, 75001 PARIS (FR)

## Description

Technical Field

The present invention relates to a method for producing a chromatography carrier, to a method for producing a chromatography column, and to a chromatography carrier.

Background Art

In recent years, in the field of biomedicine such as antibody preparations, the technique of forming target substances (e.g., a protein) via gene expression has been remarkably developed. In such development, enhancement of productivity in a purification step employing chromatography or the like becomes a key factor. One possible procedure of enhancing productivity includes lowering the level of impurities present in pharmaceutical sources (e.g., protein derived from host cells and deoxyribonucleic acid) to the greatest extent possible through a single purification operation, so as to reduce the number of purification operations and related steps. In order to achieve such a procedure, there is increasing demand for a suitable chromatography carrier. As such chromatography matrices, there have been reported a carrier prepared by polymerizing divinylbenzene, ethylvinylbenzene, and glycidyl methacrylate, further cross-linking with adipic acid dihydrazide, to thereby form cross-linked porous particles, and immobilizing a ligand onto the particles (see Patent Document 1), and a carrier prepared by immobilizing a ligand onto cross-linked agarose particles (see Patent Document 2).

Prior Art Documents

Patent Documents

Patent Document 1: WO 2019/039545, pamphlet
Patent Document 2: Japanese (kohyo) Patent Publication No. 2016-507729

Summary of the Invention

Problems to be Solved by the Invention

However, the chromatography matrices disclosed in Patent Documents 1 and 2 exhibit insufficient liquid permeability and pressure-resistant characteristic during liquid passage. Specifically, when the chromatographic flow rate or scale increases, the matrices tend to be compressed, and an additional load is imposed on a step conducted after the purification step, leading to a drop in productivity, which is problematic.

Thus, an object of the present invention is to provide a chromatography carrier which exhibits high liquid permeability and an excellent pressure-resistant characteristic during liquid passage.

Means for Solving the Problem

The above object has been addressed by the following means <1> to <12>.

<1> A method for producing a chromatography carrier, the method comprising the following steps 1 and 2:

(step 1) a step of providing a solid phase support, wherein the solid phase support provided in step 1 is formed of porous particles on which a ligand has or has not been immobilized; and

(step 2) a step of subjecting the solid phase support to sieve classification, wherein the coefficient of variation of the volume-based particle size distribution (hereinafter may be referred to as "volume particle size distribution") of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0 (hereinafter, the method may be referred to as the chromatography carrier production method of the present invention).

<2> A method for producing a chromatography carrier, the method comprising the following steps 1 and 2:

(step 1) a step of providing a solid phase support, wherein the solid phase support provided in step 1 is formed of porous particles on which a ligand has been immobilized; and
(step 2) a step of subjecting the solid phase support to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

<3> A method for producing a chromatography carrier, the method comprising the following steps 1 and 2:

(step 1) a step of providing a solid phase support, wherein the solid phase support provided in step 1 is formed of porous particles on which a ligand has not been immobilized; and
(step 2) a step of subjecting the solid phase support to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

<4> A chromatography carrier production method as described in <3>, which further includes (step 3): a step of immobilizing a ligand onto the porous particles which have undergone sieve classification in step 2.
<5> A chromatography carrier production method as described in any of <1> to <4>, wherein the sieve classification of step 2 includes (step 2a): a step of performing the sieve classification by means of a sieve having a mesh opening of 10% or greater and smaller than 200%, with respect to the mean volume diameter of the solid phase support before sieve classification (2a-d) as 100%, to thereby recover the residue over the sieve; and (step 2b): a step of performing sieve classification of the residue by means of a sieve having a mesh opening greater than that of the sieve of step 2a and smaller than 600% of the particle size (2a-d), to thereby recover a matter having passed through the sieve, wherein step 2a and step 2b are performed in that order or in reverse order.
<6> A chromatography carrier production method as described in any of <1> to <5>, wherein the sieve classification of step 2 is a wet process.
<7> A chromatography carrier production method as described in any of <1> to <6>, wherein the coefficient of variation is 5% to 20%, and the ratio (d1/d50) is 0.60 to 0.95.
<8> A chromatography carrier production method as described in any of <1> to <7>, wherein step 1 includes a step of dispersing a monomer composition in an aqueous medium and conducting suspension polymerization.
<9> A method for producing a chromatography column, the method comprising a step of charging a carrier into a column vessel, wherein the carrier is formed of porous particles onto which a ligand has been immobilized; and the carrier has a coefficient of variation of the volume particle size distribution of 1% to 22% and a ratio (d1/d50) of volume cumulative 1% particle size d1 to volume cumulative 50% particle size d50 of 0.55 to 1.0 (hereinafter, the method may be referred to as the chromatography carrier production method of the present invention).
<10> A chromatography carrier, which is dispersed in a dispersion medium, wherein the carrier is formed of porous particles onto which a ligand has been immobilized; and the carrier has a coefficient of variation of the volume particle size distribution of 1% to 22% and a ratio (d1/d50) of volume cumulative 1% particle size d1 to volume cumulative 50% particle size d50 of 0.55 to 1.0 (hereinafter the carrier may be referred to as the chromatography carrier of the present invention).
<11> A chromatography carrier as described in <10>, wherein the carrier has a volume cumulative 50% particle size d50 of 55 $\mu$m to 100 $\mu$m.
<12> A chromatography carrier as described in <10> or <11>, wherein the carrier has a volume cumulative 1% particle size d1 of 30 $\mu$m to 75 $\mu$m.

Effects of the Invention

The present invention can provide a chromatography carrier which exhibits high liquid permeability and an excellent pressure-resistant characteristic during liquid passage.

Brief Description of the Drawings

[Fig. 1] A graph showing a volume particle size distribution of carrier W1 (Example 1).
[Fig. 2] A graph showing a volume particle size distribution of carrier W3 (Example 3).
[Fig. 3] A graph showing a volume particle size distribution of carrier W5 (Example 5).

Modes for Carrying Out the Invention

<Chromatography carrier production method>

The chromatography carrier production method of the present invention is characterized by comprising the following steps 1 and 2:

(step 1) a step of providing a solid phase support, wherein the solid phase support provided in step 1 is formed of porous particles on which a ligand has or has not been immobilized; and
(step 2) a step of subjecting the solid phase support to sieve classification, wherein the coefficient of variation of the volume-based particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

(Step 1)

In step 1, a solid phase support is provided. The solid phase support provided in step 1 is a solid phase formed of porous particles support onto which a ligand has or has not been immobilized.
The species of the porous particles preferably contains a polymer. Such porous particles may be formed of a natural polymer of a polysaccharide such as agarose, dextran, or cellulose, or a synthetic polymer. However, from the viewpoints of enhancing dynamic binding capacity and improving the uniformity in particle size so as to simplify sieve classification, porous particles of a synthetic polymer are preferred. Also, the porous particles are preferably formed of a water-insoluble material.
The solid phase support may be produced through a customary method. Step 1 preferably includes a step of preparing porous particles onto which a ligand has not been immobilized (hereinafter, the step may also be called "step 1a").

-Step 1a-

In step 1a, in order to facilitate preparation of synthetic polymer porous particles having a desired particle size, preferably, a monomer composition is dispersed in an aqueous medium, and the composition is caused to be suspension-polymerized. The monomer composition employed in step 1a preferably contains a monomer having a functional group. The functional group present in the monomer is preferably a group which can be employed in an additional chemical reaction (e.g., reaction with a cross-linking agent) and may harbor a ligand via immobilization. Examples of the functional group include those selected from the group consisting of a cyclic ether group, a carboxyl group, -C(=O)-O-C(=O)-, a succinimide oxycarboxyl group, a formyl group, a hydroxyl group, and an isocyanato group. Of these, a cyclic ether group is preferred.
The "cyclic ether group" is preferably one having a ring structure having 3 to 7 atomic nodes. The cyclic ether group may have an alkyl group as a substituent. Examples of the cyclic ether group include those represented by the following formulas (1) to (6). Among them, cyclic ether groups represented by formulas (1), (3), and (6) are preferred, with cyclic ether groups represented by formula (1) being more preferred.

[F1]

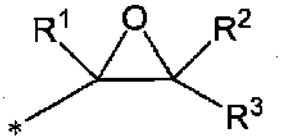

(1)

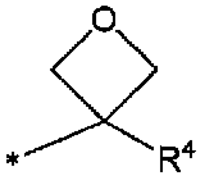

(2)

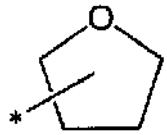

(3)

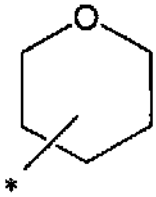

(4)

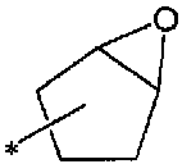

(5)

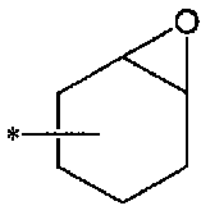

(6)

(In the formulas, each of $R^1$ to $R^4$ represents a hydrogen atom or an alkyl group; and symbol "*" represents a bond.)

Each of the alkyl groups represented by $R^1$ to $R^4$ preferably has 1 to 4 carbon atoms, more preferably 1 or 2 carbon atoms. The alkyl group may be of a linear chain or a branched chain. Examples of the alkyl group include methyl, ethyl, n-propyl, isopropyl, n-butyl, sec-butyl, and tert-butyl. Each of $R^1$ to $R^4$ is preferably a hydrogen atom.

The monomer having a functional group is preferably a monomer having a ligand-immobilizable functional group and a polymerizable unsaturated group. Examples of such monomers include (meth)acrylate monomers each having a cyclic ether group such as glycidyl (meth)acrylate, 3-oxiranylpropyl (meth)acrylate, 4-oxiranylbutyl (meth)acrylate, 5-oxiranylpentyl (meth)acrylate, 6-oxiranylhexyl (meth)acrylate, 7-oxiranylheptyl (meth)acrylate, 8-oxiranyloctyl (meth)acrylate, (3-methyloxiranyl)methyl (meth)acrylate, 4-hydroxybutyl (meth)acrylate glycidyl ether, glycerin mono(meth)acrylate glycidyl ether, 3,4-epoxycyclohexylmethyl (meth)acrylate, 3,4-epoxycyclohexylethyl (meth)acrylate, 3,4-epoxycyclohexylpropyl (meth)acrylate, $\alpha$-(meth)acryl-$\omega$-glycidyl polyethylene glycol, and tetrahydrofurfuryl (meth)acrylate; aromatic vinyl monomers each having a cyclic ether group such as (vinylbenzyl) glycidyl ether, (isopropenylbenzyl) glycidyl ether, (vinylphenethyl) glycidyl ether, (vinylphenylbutyl) glycidyl ether, (vinylbenzyloxyethyl) glycidyl ether, (vinylphenyl) glycidyl ether, (isopropenylphenyl) glycidyl ether, and 1,2-epoxy-3-(4-vinylbenzyl)propane; allyl ether monomers each having a cyclic ether group such as allyl glycidyl ether; (meth)acrylate monomers each having a isocyanato group such as isocyanatoethyl (meth)acrylate; unsaturated dicarboxylic anhydride monomers such as maleic anhydride, methylmaleic anhydride, and glutaconic anhydride; and (meth)acrylic acid, 3,4-epoxy-1-butene, and 3,4-epoxy-3-methyl-1-butene. These monomers may be used singly or in combination of two or more species.

Among these monomers, (meth)acrylate monomers each having a cyclic ether group are preferred, with glycidyl (meth)acrylate being particularly preferred.

The total amount of the monomers each having functional group is preferably 35 parts by mass or more, more preferably 45 parts by mass or more, particularly preferably 55 parts by mass or more, with respect to 100 parts by mass of all the monomers used in step 1a, and preferably 99 parts by mass or less, more preferably 90 parts by mass or less, particularly preferably 85 parts by mass or less, with respect to 100 parts by mass of all the monomers used in step 1a.

Also, the monomer composition employed in step 1a may further contain a monomer other than the monomer having a functional group (hereinafter may be referred to as an additional monomer) in addition to the aforementioned monomer having functional group.

Examples of the additional monomer include a monomer having a polymerizable unsaturated group, which monomer has no functional group that can immobilize a ligand. The additional monomer is generally divided into a non-cross-linkable monomer and a cross-linkable monomer. These types of monomers may be used singly or in combination of both types. Notably, according to the present invention, even when a monomer having no hydrophilic group (e.g., a hydroxyl group) is used as the additional monomer, a sufficient anti-fouling property can be attained. Thus, the present invention allows a wide range of monomer compositions.

Examples of the aforementioned non-cross-linkable monomer include non-cross-linkable (meth)acrylate monomers, non-cross-linkable (meth)acrylamide monomers, non-cross-linkable aromatic vinyl monomers, non-cross-linkable vinyl ketone monomers, non-cross-linkable (meth)acrylonitrile monomers, and non-cross-linkable N-vinylamide monomers. These monomers may be used singly or in combination of two or more species. Among the non-cross-linkable monomers, non-cross-linkable (meth)acrylate monomers and non-cross-linkable aromatic vinyl monomers are preferred.

Examples of the non-cross-linkable (meth)acrylate monomer include methyl (meth)acrylate, ethyl (meth)acrylate, n-butyl (meth)acrylate, 4-tert-butyl (meth)acrylate, isobutyl (meth)acrylate, n-octyl (meth)acrylate, 2-ethylhexyl (meth)acrylate, cyclohexyl (meth)acrylate, methoxyethyl (meth)acrylate, hydroxyethyl (meth)acrylate, hydroxypropyl (meth)acrylate, glycerol mono(meth)acrylate, trimethylolethane mono(meth)acrylate, trimethylolpropane mono(meth)acrylate, butanetriol mono(meth)acrylate, polyethylene glycol mono(meth)acrylate, methoxypolyethylene glycol (meth)acrylate, pentaerythritol mono(meth)acrylate, dipentaerythritol mono(meth)acrylate, and inositol mono(meth)acrylate. These monomers may be used singly or in combination of two or more species.

Examples of the non-cross-linkable (meth)acrylamide monomer include (meth)acrylamide, dimethyl (meth)acrylamide, hydroxyethyl (meth)acrylamide, (meth)acryloylmorpholine, and diacetone (meth)acrylamide. These monomers may be used singly or in combination of two or more species.

Examples of the non-cross-linkable aromatic vinyl monomer include styrenes such as styrene, α-methylstyrene, halo-styrene, 4-methylstyrene, 2,4-dimethylstyrene, 2,4,6-trimethylstyrene, ethylvinylbenzene, 4-isopropylstyrene, 4-n-butylstyrene, 4-isobutylstyrene, and 4-tert-butylstyrene; and vinylnaphthalenes such as 1-vinylnaphthalene and 2-vinylnaphthalene. These monomers may be used singly or in combination of two or more species.

Examples of the non-cross-linkable vinyl ketone monomer include ethyl vinyl ketone, propyl vinyl ketone, and isopropyl vinyl ketone. These monomers may be used singly or in combination of two or more species.

Examples of the non-cross-linkable (meth)acrylonitrile monomer include acrylonitrile and methacrylonitrile. These monomers may be used singly or in combination of two or more species.

Examples of the non-cross-linkable N-vinylamide monomer include N-vinylacetamide and N-vinylproionamide. These monomers may be used singly or in combination of two or more species.

The total amount of the non-cross-linkable monomers is preferably 0.01 parts by mass or more, more preferably 0.05 parts by mass or more, particularly preferably 0.1 parts by mass or more, with respect to 100 parts by mass of all the monomers used in step 1a, and preferably 30 parts by mass or less, more preferably 15 parts by mass or less, particularly preferably 5 parts by mass or less, with respect to 100 parts by mass of all the monomers used in step 1a.

Examples of the cross-linkable monomer include a (meth)acrylate-type cross-linkable monomer, an aromatic vinylic cross-linkable monomer, and an allylic cross-linkable monomer. These monomers may be used singly or in combination of two or more species. The cross-linkable monomer is preferably a 2- to 5-functional cross-linkable monomer, with a bi- or tri-functional cross-linkable monomer being more preferred. Among such cross-linkable monomers, (meth)acrylate-type cross-linkable monomers and aromatic vinylic cross-linkable monomers are preferred.

Examples of the (meth)acrylate-type cross-linkable monomer include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, 1,4-butanediol di(meth)acrylate, 1,6-hexanediol di(meth)acrylate, glycerin di(meth)acrylate, trimethylolethane di(meth)acrylate, trimethylolpropane di(meth)acrylate, trimethylolpropane tri(meth)acrylate, butanetriol di(meth)acrylate, pentaerythritol di(meth)acrylate, pentaerythritol tri(meth)acrylate, pentaerythritol tetra(meth)acrylate, glucose di(meth)acrylate, glucose tri(meth)acrylate, glucose tetra(meth)acrylate, dipentaerythritol di(meth)acrylate, dipentaerythritol tri(meth)acrylate, dipentaerythritol tetra(meth)acrylate, dipentaerythritol penta(meth)acrylate, inositol di(meth)acrylate, inositol tri(meth)acrylate, inositol tetra(meth)acrylate, mannitol di(meth)acrylate, mannitol tri(meth)acrylate, mannitol tetra(meth)acrylate, and mannitol penta(meth)acrylate. These monomers may be used singly or in combination of two or more species.

Examples of the aromatic vinylic cross-linkable monomer include divinylbenzene, trivinylbenzene, divinyltoluene, divinylxylene, divinylethylbenzene, and divinylnaphthalene. These monomers may be used singly or in combination of two or more species.

Examples of the allylic cross-linkable monomer include diallyl phthalate, diallyl isophthalate, diallyl terephthalate, diallyl maleate, diallyl fumarate, diallyl itaconate, diallyl trimellitate, triallyl trimellitate, triallyl cyanurate, diallyl isocyanurate, and triallyl isocyanurate. These monomers may be used singly or in combination of two or more species.

In addition to the aforementioned specific examples, examples of the cross-linkable monomer further include dehydration-condensation products of (meth)acrylic acid with an aminoalcohol (e.g., diaminopropanol, tris(hydroxymethylamino)methane, or glucosamine), and conjugated diolefines such as butadine and isoprene.

The total amount of the cross-linkable monomers is preferably 1 part by mass or more, more preferably 5 parts by mass or more, particularly preferably 10 parts by mass or more, with respect to 100 parts by mass of all the monomers used in step 1a, and preferably 50 parts by mass or less, more preferably 40 parts by mass or less, particularly preferably

30 parts by mass or less, with respect to 100 parts by mass of all the monomers used in step 1a.

Examples of the aqueous medium include an aqueous solution of a water-soluble polymer, and examples of the water-soluble polymer include hydroxyethylcellulose, polyvinyl alcohol, carboxymethylcellulose, polyvinylpyrrolidone, starch, and gelatin.

The total amount of the aqueous media is generally about 200 parts by mass or more and about 7,000 parts by mass or less, with respect to 100 parts by mass of all the monomers.

When water is used as a dispersion medium of the aqueous medium, a dispersion stabilizer such as sodium carbonate, calcium carbonate, sodium sulfate, calcium phosphate, or sodium chloride may be used.

Examples of the specific mode of step 1a include the following procedures: dissolving a polymerization initiator in a liquid mixture (monomer solution) containing a monomer composition and an optional pore-forming agent, suspending the resultant mixture in an aqueous medium, and heating to a specific temperature to evoke polymerization; dissolving a polymerization initiator in a liquid mixture (monomer solution) containing a monomer composition and an optional pore-forming agent, adding the resultant mixture to an aqueous medium heated to a specific temperature, to evoke polymerization; and suspending a liquid mixture (monomer solution) containing a monomer composition and an optional pore-forming agent in an aqueous medium, heating the resultant suspension to a specific temperature, and adding a polymerization initiator to evoke polymerization. By employing any of the modes in step 1a, uniformity in particle size is improved, and preparation of porous particles having excellent liquid permeability can be facilitated.

The polymerization initiator is preferably a radical polymerization initiator. Examples of the radical polymerization initiator include an azo-type initiator, a peroxide-type initiator, and a redox-type initiator. Specific examples include azobisisobutyronitrile, methyl azobisisobutyrate, azobis-2,4-dimethylvaleronitrile, benzoyl peroxide, di-tert-butyl peroxide, and benzoyl peroxide-dimethylaniline. The total amount of the polymerization initiators is generally about 0.01 parts by mass or more and about 10 parts by mass or less, with respect to 100 parts by mass of all the monomers.

The aforementioned pore-forming agent is used to produce porous particles. In an oil drop polymerization system, the pore-forming agent is co-present with monomers and serves as a non-polymerization component for providing pores. No particular limitation is imposed on the pore-forming agent, so long as it can be easily removed. Examples include various organic solvents and linear polymers which can be dissolved in a monomer mixture. These pore-forming agents may be used in combination.

Examples of the pore-forming agent include aliphatic hydrocarbons such as hexane, heptane, octane, nonane, decane, and undecane; alicyclic hydrocarbons such as cyclopentane and cyclohexane; aromatic hydrocarbons such as benzene, toluene, xylene, naphthalene, and ethylbenzene; halohydrocarbons such as carbon tetrachloride, 1,2-dichloroethane, tetrachloroethane, and chlorobenzene; aliphatic alcohols such as butanol, pentanol, hexanol, heptanol, 4-methyl-2-pentanol, and 2-ethyl-1-hexanol; alicyclic alcohols such as cyclohexanol; aromatic alcohols such as 2-phenylethyl alcohol and benzyl alcohol; ketones such as diethyl ketone, methyl isobutyl ketone, diisobutyl ketone, acetophenone, 2-octanone, and cyclohexanone; ethers such as dibutyl ether, diisobutyl ether, anisole, and ethoxybenzene; esters such as isopentyl acetate, butyl acetate, 3-methoxybutyl acetate, and diethyl malonate; and linear polymers such as a homopolymer of a non-cross-linkable vinyl monomer. These pore-forming agents may be used singly or in combination of two or more species.

The total amount of the pore-forming agents is generally about 20 parts by mass or more and about 1,000 parts by mass or less, with respect to 100 parts by mass of all the monomers.

In step 1a, various surfactants may be used. Examples of such surfactants include anionic surfactants such as alkyl sulfate ester salts, alkyl aryl sulfate ester salts, alkyl phosphate ester salts, and fatty acid salts. In addition, a polymerization inhibitor may also be used. Examples of the inhibitor include nitrite salts such as sodium nitrite; iodide salts such as potassium iodide; tert-butylpyrocatechol; benzoquinone; picric acid; hydroquinone; copper chloride; and ferric chloride. Further, a polymerization modulator such as dodecylmercaptan may also be used.

The polymerization temperature in step 1a may be modified in accordance with the polymerization initiator employed. Generally, the polymerization temperature is about 2 to about 100°C. When azobisisobutyronitrile is used as a polymerization initiator, the polymerization temperature is preferably 50 to 100°C, more preferably 60 to 95°C. The polymerization time is generally 5 minutes to 48 hours, preferably 10 minutes to 24 hours.

-Step 1b-

The chromatography carrier production method of the present invention preferably includes an additional step of bringing the porous particles obtained in step 1a onto which no ligand has been immobilized into contact with a cross-linking agent (hereinafter may also be referred to as step 1b). When a monomer composition employed in step 1a includes a monomer having a functional group, a cross-linking agent is added to parts of the functional groups present in the molecules of the polymer forming the porous particles in step 1b, whereby a partial structure attributed to the cross-linking agent is introduced. As a result, the remaining functional groups are cross-linked by the mediation of a moiety derived from the cross-linking agent.

Alternatively, without performing step 1b after step 1a, a step of bringing the solid phase support obtained after sieve classification of step 2 into contact with a cross-linking agent may be included. The production method including such a step includes, for example, the following modes: a mode in which the solid phase support is brought into contact with the cross-linking agent at a timing between step 2a and step 2b (specifically, conducting step 2a, a cross-linking step, and step 2b in that order, or step 2b, a cross-linking step, and step 2a in that order), and a mode in which the solid phase support is brought into contact with the cross-linking agent after performing step 2a and step 2b (specifically, conducting step 2a, step 2b, and a cross-linking step in that order, or step 2b, step 2a, and a cross-linking step in that order). Among these modes, preferred is a mode in which the solid phase support is brought into contact with the cross-linking agent at a timing between step 2a and step 2b.

No particular limitation is imposed on the cross-linking agent employed in step 1b, so long as it can provide a cross-link structure via reaction with a functional group that can immobilize a ligand. The cross-linking agent is preferably such that it can provide a cross-link structure via reaction with a functional group that can immobilize a ligand, and has at least two groups represented by -C(=O)-NH- in the molecule thereof.

Specifically, in the case where the porous particles obtained in step 1a have a cyclic ether group, a cross-linking agent having at least two groups represented by -C(=O)-NH-$NH_2$ as cross-linkable groups in the molecule thereof, there may be used a cross-linking agent having at least two groups represented by -C(=O)-NH- as cross-linkable groups in the molecule thereof, and the like.

Specifically, in the case where the porous particles obtained in step 1a have a carboxyl group, -C(=O)-O-C(=O)-, a succinimidooxycarbonyl group, a formyl group, or an isocyanato group, a cross-linking agent having at least two groups represented by -C(=O)-NH-$NH_2$ as cross-linkable groups in the molecule thereof may be used.

Examples of the aforementioned cross-linking agent having at least two groups represented by -C(=O)-NH- in the molecule thereof include dicarboxylic acid dihydrazides such as oxalyldihydrazide, malonic acid dihydrazide, succinic acid dihydrazide, 2,3-dihydroxysuccinic acid dihydrazide, glutaric acid dihydrazide, adipic acid dihydrazide, pimelic acid dihydrazide, octanedioic acid dihydrazide, nonandioic acid dihydrazide, sebacic acid dihydrazide, dodecanedioic acid dihydrazide, phthalic acid dihydrazide, isophtalic acid dihydrazide, terephthalic acid dihydrazide, and quinolic acid dihydrazide; tricarboxylic acid trihydrazides such as cyclohexanetricarboxylic acid trihydrazide; and (alkylenebisimino)bis(oxoalkanoic acids) such as N1,N1-(ethane-1,2-diyl)bis(succinic acid monoamide). These cross-linking agents may be used singly or in combination of two or more species. Among these cross-linking agents, liquid permeability, for improving pressure-resistant characteristic during liquid passage and antifouling property, dicarboxylic acid dihydrazides and (alkylenebisimino)bis(oxoalkanoic acids) are preferred, with dicarboxylic acid dihydrazides being more preferred.

Also, a cross-linking agent other than those having at least two groups represented by -C(=O)-NH- as cross-linkable groups in the molecule thereof may be used in step 1b. Examples of such a cross-linking agent include polyfunctional isocyanate-type cross-linking agents, polyfunctional epoxy-type cross-linking agents, polyfunctional aldehyde-type cross-linking agents, polyfunctional thiol-type cross-linking agents, polyfunctional oxazoline-type cross-linking agents, polyfunctional aziridine-type cross-linking agents, and metal chelate-type cross-linking agents.

The total amount of the cross-linking agents, with respect to 1 mol of functional groups attributed to monomers having a functional group, is preferably 0.01 mole equivalents or more and 0.8 mole equivalents or less, more preferably 0.05 mole equivalents or more and 0.7 mole equivalents or less, particularly preferably 0.1 mole equivalents or more and 0.6 mole equivalents or less.

Notably, step 1b may be conducted in the presence of a basic catalyst. Examples of the basic catalyst include triethylamine, N,N-dimethyl-4-aminopyridine, sodium hydroxide, and diisopropylethylamine. These basic catalysts may be used singly or in combination of two or more species.

No particular limitation is imposed on the reaction time in step 1b. The reaction time is generally about 0.5 to about 72 hours, preferably 0.5 to 48 hours. The reaction temperature may be appropriately selected to a temperature not higher than the boiling point of the solvent employed, and is generally about 2 to about 100°C.

-Step 1c-

In the case where porous particles on which a ligand has been immobilized are provided as a solid phase support, the chromatography carrier production method of the present invention preferably includes an additional step of immobilizing a ligand onto the porous particles obtained in step 1a or 1b (hereinafter this step may also be referred to as "step 1c"). Thus, when a monomer having a functional group is used as a monomer composition in step 1a, a ligand is linked to the functional group present in the polymer molecules forming the porous particles by virtue of step 1c.

The ligand is preferably a molecule which can capture a target substance, or an ion exchange group which allows a target substance to be incorporated via functional groups on the porous particles. Examples of the ligand include cation exchange groups such as a sulfo group and a phosphono group; anion exchange groups such as an amino group and a quaternary ammonium group; proteins such as Protein A, Protein G, and avidin; peptides such as insulin; nucleic acids such as DNA and RNA; enzymes; chelate compounds such as iminodiacetic acid; antibodies; antigens; hormones;

heparin, Lewis X, and saccharides such as gangliosides; receptors; aptamers; vitamins such as biotin and derivatives thereof; metal ions; synthetic dyes; and low-molecule compounds such as 2-aminophenylboric acid, 4-aminobenzamidine, and glutathione. Notably, any of the above examples of the ligand may be used in its entirety, or a fragment thereof obtained through recombination, enzyme treatment, etc. may be used. Alternatively, artificially synthesized peptides and peptide derivatives may also be used.

Among the aforementioned ligands, proteins, peptides, nucleic acids, enzymes, and chelate compounds are preferred, with proteins and peptides being more preferred. Proteins are particularly preferred. Among affinity ligands targeting an antibody, immunoglobulin-linking proteins are particularly preferred.

Examples of the affinity ligand to an antibody include peptide ligands, protein ligands, and chemically synthesized ligands (synthetic compounds), and peptide ligands and protein ligands are preferred. Among them, Protein A, Protein G, Protein L, Protein H, Protein D, Protein Arp, Protein FcγR, antibody-linking synthetic peptide ligands, and analogues thereof are preferred, with Protein A, Protein G, Protein L, and analogues thereof being more preferred. Protein A and analogues thereof are particularly preferred.

From the viewpoint of augmenting the dynamic binding capacity, the amount of ligand immobilized is preferably 10 mg to 300 mg, more preferably 25 mg to 150 mg, with respect to 1 g (dry weight) of porous particles obtained in step 1a or 1b.

Immobilization of a ligand onto porous particles may be performed through a technique generally employed in the art. Preferably, immobilization of a ligand is performed through chemical bonding. One example is binding a ligand to a functional group that can fix the ligand. This procedure may be carried out with reference to WO 2015/119255 (pamphlet), WO 2015/041218 (pamphlet), etc. In one specific mode of the procedure, an amino group or the like of a ligand is linked to a cyclic ether group, a carboxyl group, -C(=O)-O-C(=O)-, a formyl group, or the like of porous particles.

Also, immobilization may be conducted through, for example, the following methods: a technique involving controlling the orientation of a ligand (US Patent No. 6,399,750, Ljungquist C. et al., Eur. J. Biochem., 1989, vol. 186, pp. 557-561); a method of immobilizing a ligand onto porous particles by the mediation of a linker (spacer) (US Patent No. 5,260,373, JP-A 2010-133733, and JP-A 2010-133734); and a technique involving accumulation of ligand molecules on porous particles by the mediation of an associating group (JP-A 2011-256176).

Alternatively, the porous particles on which a ligand has been immobilized may be brought into contact with a thiol compound such as methanethiol or thioglycerol, to thereby open the ring of unreacted functional groups or the like. This treatment may be performed with reference to WO 2015/119255 (pamphlet) or the like.

The mean volume diameter of the solid phase support provided in step 1 is preferably 30 μm or greater, more preferably 40 μm or greater, particularly preferably 50 μm or greater, and preferably 120 μm or smaller, more preferably 100 μm or smaller, particularly preferably 95 μm or smaller. The specific range of the mean volume diameter of the solid phase support provided in step 1 is preferably 30 μm to 120 μm, more preferably 40 μm to 100 μm, particularly preferably 50 μm to 95 μm.

The mean volume diameter of the solid phase support provided in step 1 may be determined based on ISO 13320:2009.

(step 2)

In step 2, the solid phase support provided in step 1 is subjected to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

The sieve classification of step 2 is essentially performed such that the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0. So long as the coefficient of variation after immobilization of the ligand on the porous particles and the ratio (d1/d50) of volume cumulative 1% particle size d1 to volume cumulative 50% particle size d50 in terms of the porous particles is adjusted to 0.55 to 1.0 fall within the above ranges, sieve classification may be performed before and/or after immobilization of the ligand. Notably, in order to adjust the coefficient of variation after immobilization of the ligand on the porous particles, and the ratio (d1/d50) to fall within the above ranges, another classification operation such as centrifugation or gravity separation may be additionally performed.

By controlling the coefficient of variation of the volume particle size distribution to 1% or more, productivity of the chromatography carrier is enhanced. Also, by controlling the coefficient of variation to 22% or less, the chromatography carrier exhibits an improvement in liquid permeability and pressure-resistant characteristic during liquid passage.

The coefficient of variation of volume particle size distribution is preferably 5% or more, more preferably 6% or more, still more preferably 8% or more, particularly preferably 10% or more, from the viewpoint of enhancing productivity of the chromatography carrier, and is preferably 20% or less, more preferably 18% or less, still more preferably 17% or

less, particularly preferably 16% or less, from the viewpoint of improving liquid permeability and pressure-resistant characteristic during liquid passage. The specific range of the coefficient of variation is preferably 5% to 20%, more preferably 6% to 20%, still more preferably 8% to 18%, yet more preferably 8% to 17%, particularly preferably 10% to 16%.

By controlling the coefficient of variation of the volume particle size distribution to 18% or less or 17% or less, the chromatography carrier exhibits a considerable improvement in liquid permeability and pressure-resistant characteristic during liquid passage.

The coefficient of variation of the volume particle size distribution is a value determined on the basis of ISO 13319:2007, when a ligand has been immobilized on the porous particles. More specifically, the coefficient of variation may be determined through the method described in the Examples below.

By controlling the aforementioned ratio (d1/d50) of volume cumulative 1% particle size d1 to volume cumulative 50% particle size d50 to 0.55 or more, the chromatography carrier exhibits an improvement in liquid permeability and pressure-resistant characteristic during liquid passage. Also, by controlling the ratio (d1/d50) to 1.0 or less, a suitable packing state can be easily achieved, when the carrier is charged into a column.

In sieve classification, the ratio (d1/d50) of volume cumulative 1% particle size d1 to volume cumulative 50% particle size d50 is preferably adjusted to 0.60 or more, more preferably 0.63 or more, still more preferably 0.65 or more, particularly preferably 0.70 or more, from the viewpoint of improving liquid permeability and pressure-resistant characteristic during liquid passage, and is preferably adjusted to 0.95 or less, more preferably 0.90 or less, particularly preferably 0.85 or less, from the viewpoint of easily achieving a suitable packing state when the carrier is charged into a column. The specific range of the ratio (d1/d50) of volume cumulative 1% particle size d1 to volume cumulative 50% particle size d50 is preferably 0.60 to 0.95, more preferably 0.63 to 0.90, still more preferably 0.65 to 0.90, particularly preferably 0.70 to 0.85.

By controlling the ratio (d1/d50) of volume cumulative 1% particle size d1 to volume cumulative 50% particle size d50 to 0.63 or more or 0.70 or more, the chromatography carrier exhibits a considerable improvement in liquid permeability and pressure-resistant characteristic during liquid passage.

In step 2, sieve classification is performed so that the skewness of the volume particle size distribution of the porous particles when a ligand has been immobilized is preferably adjusted to -0.1 or more, more preferably -0.01 or more, still more preferably 0.01 or more, yet more preferably 0.1 or more, further more preferably 0.3 or more, particularly preferably 0.4 or more, from the viewpoint of improving liquid permeability and pressure-resistant characteristic during liquid passage. Also, sieve classification is performed so that the skewness of the volume particle size distribution of the porous particles when a ligand has been immobilized is preferably adjusted to 5 or less, more preferably 4 or less, still more preferably 3 or less, particularly preferably 2 or less, from the viewpoint of enhancing dynamic binding capacity. The specific range of the skewness of the volume particle size distribution is preferably -0.1 to 5, more preferably -0.01 to 4, still more preferably 0.01 to 3, yet more preferably 0.1 to 3, further more preferably 0.3 to 2, particularly preferably 0.4 to 2.

By controlling the skewness of the volume particle size distribution to 0.1 or more or 0.3 or more, the chromatography carrier exhibits a considerable improvement in liquid permeability and pressure-resistant characteristic during liquid passage.

The skewness of the volume particle size distribution is a value determined on the basis of ISO 13319:2007, when a ligand has been immobilized on the porous particles. More specifically, the skewness may be determined through the method described in the Examples below.

In step 2, sieve classification is performed so that the mean volume diameter is preferably adjusted to 40 μm or greater, more preferably 50 μm or greater, particularly preferably 55 μm or greater, and is preferably adjusted to 150 μm or smaller, more preferably 100 μm or smaller, still more preferably 90 μm or smaller, particularly preferably 80 μm or smaller. The specific range of the mean volume diameter is preferably 40 μm to 150 μm, more preferably 50 μm to 100 μm, still more preferably 55 μm to 90 μm, particularly preferably 55 μm to 80 μm.

The mean volume diameter is defined as a mean volume diameter value as determined through a laser diffraction scattering method on the basis of ISO 13320:2009.

In step 2, sieve classification is performed so that the volume cumulative 1% particle size d1 is preferably adjusted to 20 μm or greater, more preferably 30 μm or greater, still more preferably 35 μm or greater, particularly preferably 40 μm or greater, from the viewpoint of improving liquid permeability and pressure-resistant characteristic during liquid passage, and is preferably adjusted to 85 μm or smaller, more preferably 75 μm or smaller, yet more preferably 65 μm or smaller, still more preferably 58 μm or smaller, particularly preferably 55 μm or smaller, from the viewpoint of enhancing dynamic binding capacity. The specific range of the volume cumulative 1% particle size d1 is preferably 20 μm to 85 μm, more preferably 30 μm to 75 μm, still more preferably 35 μm to 65 μm, yet more preferably 40 μm to 58 μm, particularly preferably 40 μm to 55 μm.

By controlling the volume cumulative 1% particle size d1 to 35 μm or greater or 40 μm or greater, the chromatography carrier exhibits a considerable improvement in liquid permeability and pressure-resistant characteristic during liquid passage.

In step 2, sieve classification is performed so that the volume cumulative 5% particle size d5 is preferably adjusted to 20 μm or greater, more preferably 30 μm or greater, still more preferably 35 μm or greater, yet more preferably 40 μm or greater, particularly preferably 45 μm or greater, from the viewpoint of improving liquid permeability and pressure-resistant characteristic during liquid passage, and is preferably adjusted to 100 μm or smaller, more preferably 80 μm or smaller, still more preferably 70 μm or smaller, yet more preferably 65 μm or smaller, particularly preferably 60 μm or smaller, from the viewpoint of enhancing dynamic binding capacity. The specific range of the volume cumulative 5% particle size d5 is preferably 20 μm to 100 μm, more preferably 30 μm to 80 μm, still more preferably 35 μm to 70 μm, yet more preferably 40 μm to 65 μm, particularly preferably 45 μm to 60 μm.

By controlling the volume cumulative 5% particle size d5 to 40 μm or greater or 45 μm or greater, the chromatography carrier exhibits a considerable improvement in liquid permeability and pressure-resistant characteristic during liquid passage.

In step 2, sieve classification is performed so that the volume cumulative 50% particle size d50 is preferably adjusted to 20 μm or greater, more preferably 30 μm or greater, still more preferably 40 μm or greater, particularly preferably 55 μm or greater, from the viewpoint of improving dynamic binding capacity and pressure-resistant characteristic, and is preferably adjusted to 100 μm or smaller, more preferably 90 μm or smaller, still more preferably 85 μm or smaller, yet more preferably 75 μm or smaller, particularly preferably 65 μm or smaller, from the viewpoint of enhancing dynamic binding capacity and pressure-resistant characteristic during liquid passage. The specific range of the volume cumulative 50% particle size d50 is preferably 20 μm to 100 μm, more preferably 30 μm to 90 μm, still more preferably 30 μm to 85 μm, yet more preferably 40 μm to 75 μm, particularly preferably 55 μm to 65 μm.

In step 2, sieve classification is performed so that the ratio (d5/d50) of volume cumulative 5% particle size d5 to volume cumulative 50% particle size d50 is preferably adjusted to 0.50 or more, more preferably 0.60 or more, still more preferably 0.70 or more, particularly preferably 0.80 or more, from the viewpoint of improving liquid permeability and pressure-resistant characteristic during liquid passage, and is preferably adjusted to 1.0 or less, more preferably 0.97 or less, still more preferably 0.95 or less, particularly preferably 0.90 or less, from the viewpoint of easily achieving a suitable packing state when the carrier is charged into a column. The specific range of the ratio (d5/d50) of volume cumulative 5% particle size d5 to volume cumulative 50% particle size d50 is preferably 0.50 to 1.0, more preferably 0.60 to 0.97, still more preferably 0.70 to 0.95, particularly preferably 0.80 to 0.90.

By controlling the ratio (d5/d50) of volume cumulative 5% particle size d5 to volume cumulative 50% particle size d50 to 0.70 or more or 0.80 or more, the chromatography carrier exhibits a considerable improvement in liquid permeability and pressure-resistant characteristic during liquid passage.

The volume cumulative 1% particle size d1, volume cumulative 5% particle size d5, and volume cumulative 50% particle size d50 are derived from the values of d1, d5, and d50 as determined on the basis of ISO 13319:2007, by compensating the values with such a shape factor that the mean volume diameter as determined on the basis of ISO 13319:2007 is converted to the mean volume diameter as determined on the basis of ISO 13320:2009. Specifically, these values may be determined through the procedure described in the Examples below.

The sieve classification of step 2 may be performed as a dry process or a wet process. For easily providing porous particles having a desired particle size and preventing breakage of the porous particles, a wet process is preferred. The sieve classification may be performed by means of any classifier employed in the art. Examples of the classifier include a SATO'S SYSTEM VIBRO SEPARATOR, a VIBRO SEPARATOR STRAIGHT, a VIBRO SEPARATOR with PULVERIZER, a VIBRO SEPARATOR HIGH VIBRATION, and a VIBRO SEPARATOR with ULTRASONIC (products of Koeisangyo Co., Ltd.).

A preferred mode of the sieve classification of step 2 includes (step 2a): a step of performing sieve classification of step 2 by means of a sieve having a mesh opening of 10% or greater and smaller than 200%, with respect to the mean volume diameter of the solid phase support before sieve classification (2a-d) as 100%, to thereby recover the residue over the sieve; and (step 2b): a step of performing sieve classification of step 2 by means of a sieve having a mesh opening greater than that of the sieve of step 2a and smaller than 600% of the particle size (2a-d), to thereby recover a matter having passed through the sieve, wherein step 2a and step 2b are performed in that order or in reverse order.

The mesh opening of the sieve employed in step 2a is preferably 30% or more, more preferably 50% or more, still more preferably 60% or more, yet more preferably 62% or more, particularly preferably 68% or more (based on mean volume diameter 2a-d as 100%), from the viewpoint of improving liquid permeability and pressure-resistant characteristic during liquid passage, and preferably 150% or less, more preferably 120% or less, still more preferably 105% or less, particularly preferably 90% or less (based on mean volume diameter 2a-d as 100%), from the viewpoint of enhancing dynamic binding capacity.

The mesh opening of the sieve employed in step 2a is preferably 30% to 150%, more preferably 50% to 120%, still more preferably 60% to 105%, yet more preferably 62% to 90%, particularly preferably 68% to 90% (based on mean volume diameter 2a-d as 100%).

By controlling the mesh opening of the sieve employed in step 2a to 62% to 68% (based on mean volume

diameter 2a-d as 100%), the chromatography carrier exhibits a considerable improvement in liquid permeability and pressure-resistant characteristic during liquid passage.

The mesh opening of the sieve employed in step 2a is preferably 16 μm or greater, more preferably 20 μm or greater, still more preferably 25 μm or greater, yet more preferably 30 μm or greater, further more preferably 35 μm or greater, particularly preferably 40 μm or greater, from the viewpoint of improving liquid permeability and pressure-resistant characteristic during liquid passage, and is preferably smaller than 100 μm, more preferably 80 μm or smaller, still more preferably 70 μm or smaller, yet more preferably 60 μm or smaller, particularly preferably 50 μm or smaller, from the viewpoint of enhancing dynamic binding capacity. The specific range of the mesh opening is preferably 16 μm or greater and smaller than 100 μm, more preferably 20 μm to 80 μm, still more preferably 25 μm to 70 μm, yet more preferably 30 μm to 60 μm, further more preferably 35 μm to 60 μm, particularly preferably 40 μm to 50 μm.

When the mesh opening of the sieve employed in step 2a is greater than 70 μm and 80 μm or smaller, the mesh opening of the sieve employed in step 2b is preferably 90 μm or greater. When the mesh opening of the sieve employed in step 2a is greater than 60 μm and 70 μm or smaller, the mesh opening of the sieve employed in step 2b is preferably 75 μm or greater. When the mesh opening of the sieve employed in step 2a is greater than 50 μm and 60 μm or smaller, the mesh opening of the sieve employed in step 2b is preferably 65 μm or greater. When the mesh opening of the sieve employed in step 2a is 50 μm or smaller, the mesh opening of the sieve employed in step 2b is preferably 55 μm or greater.

Also, from the viewpoint of improving liquid permeability and pressure-resistant characteristic during liquid passage, the mesh opening of the sieve employed in step 2b is preferably smaller than 300 μm, more preferably 250 μm or smaller, still more preferably 200 μm or smaller, yet more preferably 150 μm or smaller, particularly preferably 100 μm or smaller.

No particular limitation is imposed on the chronological order of performing steps 2a and 2b. The sieve classification of step 2 may be either of the following sieve classification A and sieve classification B, but sieve classification B is preferred. When sieve classification B is carried out as the sieve classification of step 2, damage of a sieve classification apparatus can be reduced, to thereby easily control the particle size to a desired value.

Sieve classification A: a mode including (step 2a): performing sieve classification of the solid phase support provided in step 1 by means of a sieve having a mesh opening of 10% or greater and smaller than 200%, with respect to the mean volume diameter of the solid phase support before sieve classification (2a-d) as 100%, to thereby recover the residue over the sieve; and (step 2b): performing sieve classification of the residue over the sieve recovered in step 2a by means of a sieve having a mesh opening greater than that of the sieve of step 2a and smaller than 600% of the particle size (2a-d), to thereby recover a matter having passed through the sieve.

Sieve classification B: a mode including (step 2b): performing sieve classification of the solid phase support provided in step 1 by means of a sieve having a mesh opening greater than that of the sieve of step 2a and smaller than 600% of the particle size (2a-d), to thereby recover a matter having passed through the sieve; and (step 2a) performing sieve classification of the matter which has passed through the sieve and which has been recovered in step 2b by means of a sieve having a mesh opening of 10% or greater and smaller than 200%, with respect to the mean volume diameter of the solid phase support before sieve classification (2a-d) as 100%, to thereby recover the residue over the sieve.

(Step 3)

In the case where ligand-free porous particles are provided as a solid phase support in step 1, the chromatography carrier production method of the present invention preferably further includes a step of immobilizing a ligand onto the porous particles which have undergone sieve classification in step 2 (hereinafter may be referred to as "step 3"). By providing step 3 after step 2, dynamic binding capacity increases, and carrier productivity can be enhanced. When the monomer composition used in step 1a includes a monomer having a functional group, a ligand is linked to functional groups present in the molecule of a polymer forming the porous particles in step 3. Step 3 may be carried out in a manner similar to that of step 1c.

Notably, the reaction product obtained in each of the aforementioned steps may be purified by separation means such as filtration or washing.

According to the chromatography carrier production method of the present invention, a chromatography carrier exhibiting excellent liquid permeability and pressure-resistant characteristic during liquid passage can be efficiently produced in a simple manner.

In addition, since the thus-produced chromatography carrier has high hydrophilicity and excellent antifouling property, dynamic binding capacity of the immobilized ligand with respect to a target substance increases. Also, the chromatography carrier can be suitably used in affinity chromatography.

<Chromatography column production method and chromatography carrier>

Characteristic features of the chromatography column production method of the present invention reside in that the method includes a step of charging a carrier into a column vessel; the carrier is formed of porous particles onto which a ligand has been immobilized; and the carrier has a coefficient of variation of the volume particle size distribution of the carrier is 1% to 22% and a ratio (d1/d50) of volume cumulative 1% particle size d1 to volume cumulative 50% particle size d50 is 0.55 to 1.0.

The chromatography carrier of the present invention is a carrier dispersed in a dispersion medium, characterized in that the carrier is formed of porous particles onto which a ligand has been immobilized; and the carrier has a coefficient of variation of the volume particle size distribution of the carrier is 1% to 22% and a ratio (d1/d50) of volume cumulative 1% particle size d1 to volume cumulative 50% particle size d50 is 0.55 to 1.0.

Except for employing a carrier characterized in that the carrier is formed of porous particles onto which a ligand has been immobilized; and the carrier has a coefficient of variation of the volume particle size distribution of the carrier is 1% to 22% and a ratio (d1/d50) of volume cumulative 1% particle size d1 to volume cumulative 50% particle size d50 is 0.55 to 1.0, the chromatography column production method of the present invention may be carried out in a manner similar to a customary procedure.

The carrier employed in the chromatography column production method of the present invention and the chromatography carrier of the present invention are equivalent to ligand-immobilized chromatography matrices among those produced through the chromatography carrier production method of the present invention. The coefficient of variation of the volume particle size distribution, skewness of the volume particle size distribution, mean volume diameter, volume cumulative 1% particle size d1, volume cumulative 5% particle size d5, volume cumulative 50% particle size d50, (d1/d50), and (d5/d50) of the above carrier and the chromatography carrier of the present invention preferably fall within the ranges regulated in step 2.

The specific area of the above carrier and the chromatography carrier of the present invention is preferably 1 to 500 $m^2/g$, more preferably 10 to 300 $m^2/g$. The mean volume pore size of the above carrier and the chromatography carrier of the present invention is preferably 10 to 300 nm.

The specific area and mean volume pore size may be determined through a gas adsorption method, mercury porosimetry, or a similar method.

In the case where polymer-containing porous particles are used, the polymer preferably includes a structural unit (A) represented by the following formula (7) having a residue of a functional group ($Z^1$) which allows immobilization of a ligand. More preferably, the polymer includes the structural unit (A) represented by the following formula (7) having a residue of a functional group ($Z^1$) and a structural unit (B) represented by the following formula (8) having a residue of a functional group ($Z^2$) which allows immobilization of a ligand. Notably, immobilization of a ligand onto the polymer-containing porous particles may be carried out in a manner similar to a customary procedure.

[F2]

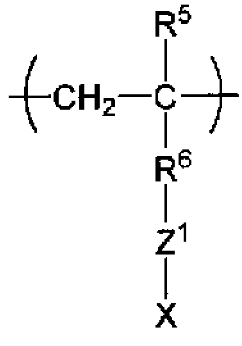

(7)

(In formula (7),

$R^5$ represents a hydrogen atom or a methyl group;
$R^6$ represents a single bond or a divalent linking group;
$Z^1$ represents a residue of a functional group which allows a ligand to be immobilized; and
X represents $-R^{15}-R^{16}$ (wherein $R^{15}$ represents a single bond or a divalent linking group; and $R^{16}$ represents a ligand).)

[F3]

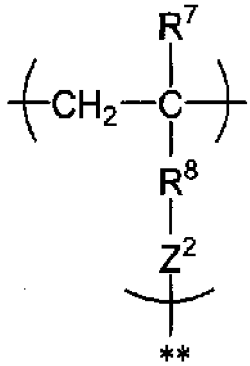

(8)

(In formula (8),

$R^7$ represents a hydrogen atom or a methyl group;
$R^8$ represents a single bond or a divalent linking group;
$Z^2$ represents a residue of a functional group which allows a ligand to be immobilized; and
** represents a bond which links to a partial structure derived from a cross-linking agent (specifically, a cross-linking agent as exemplified in relation to step 1b).)

Specific examples of the residue of a functional group which allows a ligand to be immobilized ($Z^1$ in formula (7), $Z^2$ in formula (8)) include a divalent group formed through ring-opening of a cyclic ether group, - C(=O)-, and -NH-C(=O)-. Of these, a divalent group formed through ring-opening of a cyclic ether group is preferred. The "cyclic ether group" from which the divalent group formed through ring-opening of the cyclic ether group is preferably one of the same groups as exemplified in relation to the functional group included in the monomer having the functional group. Notably, when the cyclic ether group is an epoxy group, the divalent group formed through ring-opening of a cyclic ether group is a ring-opened epoxy group ($-CHOH-CH_2-$).

The symbol "**" in formula (8) represents a bond which links to a partial structure derived from a cross-linking agent. Thus, cross-linking is achieved by a partial structure derived from the cross-linking agent.

Examples of the divalent linking group represented by $R^6$ in formula (7) or $r^8$ in formula (8) include an alkanediyl group, a group having an ether bond between carbon atoms of a C≥2 alkanediyl group, an arylene group, -C(=O)O-$R^9$-*, -C(=O)NH-$R^{10}$-*, -Ar-$R^{11}$-*, and -Ar-O$R^{12}$-*. In the formulas, Ar represents an arylene group, and the symbol "*" in $R^6$ or $R^8$ represents a bond which links to $Z^1$ or $Z^2$. Examples of the arylene group ($R^6$, $R^8$, or Ar) include a phenylene group, a naphthylene group, or a phenanthrenylene group.

Each of the groups $R^9$ to $R^{12}$ represents an alkanediyl group or a group having an ether bond between carbon atoms of a C≥2 alkanediyl group.

The number of carbon atoms of the alkanediyl ($R^6$, $R^8$, $R^9$ to $R^{12}$) is preferably 1 to 12, more preferably 1 to 6, particularly preferably 1 to 3. The alkanediyl group may be linear-chain or branched chain. Specific examples of the alkanediyl group include a methane-1,1-diyl group, an ethane-1,1-diyl group, an ethane-1,2-diyl group, a propane-1,1-diyl group, a propane-1,2-diyl group, a propane-1,3-diyl group, a propane-2,2-diyl group, a butane-1,1-diyl group, a butane-1,2-diyl group, a butane-1,3-diyl group, a butane-1,4-diyl group, a pentane-1,1-diyl group, a pentane-1,2-diyl group, a pentane-1,3-diyl group, a pentane-1,4-diyl group, a pentane-1,5-diyl group, a hexane-1,1-diyl group, a hexane-1,2-diyl group, a hexane-1,3-diyl group, a hexane-1,4-diyl group, a hexane-1,5-diyl group, a hexane-1,6-diyl group, a heptane-1,7-diyl group, and an octane-1,8-diyl group.

The "group having an ether bond between carbon atoms of a C≥2 alkanediyl group" ($R^6$, $R^8$, or $R^9$ to $R^{12}$) is preferably a group represented by $-R^a(OR^b)_pOR^c-$ (wherein each of $R^a$, $R^b$, and $R^c$ represents a C1 to C4 alkanediyl group; and p is an integer of 0 to 30).

The alkanediyl group ($R^a$, $R^b$, or $R^c$) may be linear-chain or branched chain. Specific examples of the alkanediyl group include a methane-1,1-diyl group, an ethane-1,1-diyl group, an ethane-1,2-diyl group, a propane-1,1-diyl group, a propane-1,2-diyl group, a propane-1,3-diyl group, a propane-2,2-diyl group, a butane-1,1-diyl group, a butane-1,2-diyl group, a butane-1,3-diyl group, and a butane-1,4-diyl group. The parameter "p" is preferably an integer of 0 to 20, more preferably 0 to 10, still more preferably 0 to 5, particularly preferably 0. In the case where p is an integer of 2 to 30, a plurality (p) of groups $R^b$ may be identical to or different from one another. Specific examples of suitable groups each

having an ether bond between carbon atoms of a C≥2 alkanediyl group include a C1 to C4 alkanediyloxy-C1 to C4 alkanediyl group.

Notably, the alkanediyl group or the group having an ether bond between carbon atoms of a C≥2 alkanediyl group represented by $R^6$, $R^8$, or any of $R^9$ to $R^{12}$ may have a substituent. Examples of the substituent include a hydroxyl group.

Among the aforementioned groups $R^6$ and $R^8$, -C(=O)O-$R^9$-* is particularly preferred, for easily forming a polymer.

In formula (7), the group $R^{15}$ represents a single bond or a divalent linking group, and the group $R^{16}$ represents a ligand. Examples of the ligand represented by $R^{16}$ include those as exemplified in relation to step 1c.

No particular limitation is imposed on the divalent linking group $R^{15}$, so long as it is a group which can link a ligand to the residue of the functional group which allows immobilization of a ligand.

Examples of the divalent linking group $R^{15}$ include one or more members selected from among a partial structure derived from a cross-linking agent (specifically, a cross-linking agent as exemplified in relation to step 1b), a partial structure derived from a diglycidyl ether, and a partial structure containing a heteroatom other than an oxygen atom.

Examples of the diglycidyl ether include 1,4-butane-dioldiglycidyl ether, 1,6-hexanediol diglycidyl ether, bisphenol A diglycidyl ether, ethylene glycol diglycidyl ether, diethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, and glycerin diglycidyl ether.

An example of the partial structure containing a heteroatom other than an oxygen atom is a partial structure derived from a thioglycerol.

As the divalent linking group $R^{15}$, preferred are a divalent linking group derived from diglycidyl ether; a divalent linking group formed of a partial structure derived from a cross-linking agent (preferably adipic acid dihydrazide) as exemplified in relation to step 1b and a partial structure derived from diglycidyl ether; and a divalent linking group formed of a partial structure derived from thioglycerol and a partial structure derived from diglycidyl ether.

The monomer(s) for forming the structure unit (A) or (B) is preferably the aforementioned monomer having a functional group.

The aforementioned polymer may further be formed from an additional structural unit other than structural units (A) and (B). Examples of the monomer for providing such a structural unit include those as exemplified in relation to step 1a.

The polymer content of the porous particles (except for ligand) is preferably 90 mass% to 100 mass%, more preferably 95 mass% to 100 mass%, particularly preferably 99 mass% to 100 mass%.

The amount of the partial structure derived from the cross-linking agent in the polymer is preferably 0.5 mass% to 50 mass%, more preferably 1 mass% to 40 mass%, particularly preferably 10 mass% to 35 mass%.

Examples of the dispersion medium in which the chromatography carrier of the present invention is to be dispersed include buffers, water, and alcohol. The dispersion medium may further contain an anti-fouling agent or the like. The chromatography carrier content, with respect to the total amount of the chromatography carrier and the dispersion medium as 100 mass%, is preferably 0.5 mass% to 20 mass%, more preferably 1 mass% to 15 mass%.

The column produced through the chromatography column production method of the present invention, and the chromatography carrier of the present invention are useful for affinity chromatography.

The chromatography carrier and the chromatography column produced according to the present invention, and the chromatography carrier of the present invention can be used to purify a target substance. The purification of the target substance may be performed through a customary method.

Examples of the target substance include antigens; antibodies such as a monoclonal antibody and a polyclonal antibody; cells (normal cells and cancer cells such as colorectal cancer cells and circulating tumor cells); nucleic acids such as DNA and RNA; and bio-related materials such as protein, peptide, amino acid, saccharide, polysacchairde, lipid, and vitamin, as well as a potential drug target and a low-molecule compound such as biotin.

## Examples

The present invention will next be described in detail by way of example, which should not be construed as limiting the invention thereto.

### Example 1

(1) Polyvinyl alcohol (PVA-217, product of Kuraray Co., Ltd.) (2.69 g) was added to pure water (448 g) and dissolved in water by heating under stirring, to thereby prepare aqueous solution S. Separately, a monomer composition containing divinylbenzene (product of FUJIFILM Wako Pure Chemical Corporation) (3.63 g), 1-ethyl-4-vinylbenzene

(product of ChemSampCo) (0.36 g), and glycidiyl methacrylate (product of Mitsubishi Gas Chemical Company, Inc.) (14.15 g) was dissolved in 2-octanone (product of Toyo Gosei Co., Ltd.) (29.38 g), to thereby prepare a monomer solution. Subsequently, the entire amount of the above-prepared aqueous solution S was put into a separable flask, and a thermometer, agitation paddles, and a condenser were attached to the flask. The flask was placed in a hot water bath, and the solution was stirred under nitrogen. Then, the entire amount of the monomer solution was fed into the separable flask, and the contents were heated in the hot water bath. When the temperature inside the flask reached 85°C, 2,2'-azobis(methyl isobutyrate) (product of FUJIFILM Wako Pure Chemical Corporation) (1.34 g) was added thereto, and the temperature inside the flask was maintained at 86°C.

(2) Thereafter, the mixture was further stirred for 3 hours, while the temperature was maintained at 86°C. Then, the reaction mixture was cooled and filtered. The filtered residue was washed with pure water and ethanol. The particles obtained through washing were dispersed in pure water, and the dispersion was subjected to decantation three times, to thereby remove excessively small particles. Subsequently, the thus-treated particles were dispersed in pure water so as to adjust the particle concentration to 10 mass%, to thereby yield a dispersion of the porous particles. The porous particles contained in the dispersion are referred to as "porous particles 1."

(3) Subsequently, adipic dihydrazide (product of Tokyo Chemical Industry Co., Ltd.) (0.956 g) and diisopropylethylamine (product of Tokyo Chemical Industry Co., Ltd.) (1.418 g) were added to a dispersion (100 g) of porous particles 1. The resultant mixture was heated to 70°C, and stirred for 8 hours while it was maintained at 70°C. Then, the reaction mixture was cooled and filtered, and the filtration residue was washed with pure water and ethanol. The particles obtained through washing were dispersed in pure water so as to adjust the particle concentration to 10 mass%, to thereby yield a dispersion of the porous particles. The porous particles contained in the dispersion are referred to as "porous particles 2." The mean volume diameter of porous particles 2 was determined in a manner similar to that of Test Example 1, and the diameter was found to be 53 μm.

(4) Then, porous particles 2 were put into a SATO'S SYSTEM VIBRO SEPARATOR (400DB-2S, products of Koeisangyo Co., Ltd.) equipped with a wire cloth having a mesh opening of 77 μm (product of Taiyo Wire Cloth Co., Ltd.), and a matter which had passed through the sieve (i.e., the liquid-form mixture passed through the sieve after a wet classification process) was recovered. Subsequently, the wire cloth of the SATO'S SYSTEM VIBRO SEPARATOR was changed to a wire cloth having a mesh opening of 32 μm (product of Taiyo Wire Cloth Co., Ltd.). The sieve passed liquid-form mixture was put into the above-modified vibro separator, and the residue over the sieve (i.e., the porous particles remaining on the sieve after a wet classification process) was recovered by use of pure water, to thereby yield a dispersion of porous particles. The porous particles contained in the dispersion are referred to as "porous particles 3."

(5) Then, porous particles 3 (1 g, as reduced to the mass of the dry particles) were caused to be reacted with ethylene glycol diglycidyl ether (product of Tokyo Chemical Industry Co., Ltd.) (0.069 g) for 16 hours. Separately, modified protein A (rSPA, product of Repligen) (0.15 g) was dissolved in 1.2M sodium sulfate/0.1M sodium phosphate buffer (pH: 6.6) (40 mL), to thereby prepare protein A solution. Porous particles 3 (1 g, as reduced to the mass of the dry particles) were added to the thus-prepared protein A solution, and the resultant dispersion was stirred with shaking at 25°C for 10 hours, to thereby immobilize protein A onto the particles.

The thus-yielded protein A-immobilized particles were dispersed in 1.0M α-thioglycerol (product of Tokyo Chemical Industry Co., Ltd.)/0.1M sodium sulfate (pH: 8.3) (40 mL), and the dispersion was stirred under shaking at 25°C for 17 hours, to thereby open unreacted epoxy groups. The thus-obtained protein A-immobilized particles having ring-opened unreacted epoxy groups were washed with 0.1M sodium phosphate buffer (pH: 6.6), 0.1M aqueous sodium hydroxide, and 0.1M sodium citrate buffer (pH: 3.2), to thereby yield a liquid containing an affinity chromatography filler. The filler contained in the liquid is referred to as "ligand-immobilized carrier W1."

## Example 2

The procedures of steps (1) to (4) of Example 1 were repeated, except that the wire cloth having a mesh opening of 32 μm employed in step (4) of Example 1 was changed to a wire cloth having a mesh opening of 34 μm (product of Taiyo Wire Cloth Co., Ltd.), to thereby yield a dispersion of porous particles.

Subsequently, the same step as step (5) of Example 1 was performed, to thereby yield a liquid containing an affinity chromatography filler. The filler contained in the liquid is referred to as "ligand-immobilized carrier W2."

## Example 3

The procedures of steps (1) to (4) of Example 1 were repeated, except that the wire cloth having a mesh opening of 32 μm employed in step (4) of Example 1 was changed to a wire cloth having a mesh opening of 38 μm (product of Asada Mesh Co., Ltd.), to thereby yield a dispersion of porous particles.

Subsequently, the same step as step (5) of Example 1 was performed, to thereby yield a liquid containing an affinity chromatography filler. The filler contained in the liquid is referred to as "ligand-immobilized carrier W3."

Example 4

The procedures of steps (1) to (4) of Example 1 were repeated, except that the wire cloth having a mesh opening of 32 μm employed in step (4) of Example 1 was changed to a wire cloth having a mesh opening of 43 μm (product of Taiyo Wire Cloth Co., Ltd.), to thereby yield a dispersion of porous particles.

Subsequently, the same step as step (5) of Example 1 was performed, to thereby yield a liquid containing an affinity chromatography filler. The filler contained in the liquid is referred to as "ligand-immobilized carrier W4."

Example 5

The procedures of steps (1) to (4) of Example 1 were repeated, except that the wire cloth having a mesh opening of 32 μm employed in step (4) of Example 1 was changed to a wire cloth having a mesh opening of 45 μm (product of Taiyo Wire Cloth Co., Ltd.), to thereby yield a dispersion of porous particles.

Subsequently, the same step as step (5) of Example 1 was performed, to thereby yield a liquid containing an affinity chromatography filler. The filler contained in the liquid is referred to as "ligand-immobilized carrier W5."

Example 6

The procedures of steps (1) to (4) of Example 1 were repeated, except that the wire cloth having a mesh opening of 32 μm employed in step (4) of Example 1 was changed to a wire cloth having a mesh opening of 54 μm (product of Taiyo Wire Cloth Co., Ltd.), to thereby yield a dispersion of porous particles.

Subsequently, the same step as step (5) of Example 1 was performed, to thereby yield a liquid containing an affinity chromatography filler. The filler contained in the liquid is referred to as "ligand-immobilized carrier W6."

Example 7

An agarose-base carrier Mabselect SuRe (product of Cytiva, mean volume diameter: 92 μm) was put into a SATO'S SYSTEM VIBRO SEPARATOR equipped with a wire cloth having a mesh opening of 104 μm (product of Taiyo Wire Cloth Co., Ltd.), and a matter which had passed through the sieve was recovered. Subsequently, the sieve passed liquid-form mixture was put into the same SATO'S SYSTEM VIBRO SEPARATOR equipped with a wire cloth having a mesh opening of 62 μm (product of Taiyo Wire Cloth Co., Ltd.), and the residue over the sieve (i.e., the particles remaining on the sieve after a wet classification process) was recovered by use of pure water, to thereby yield a liquid containing an affinity chromatography filler. The filler contained in the liquid is referred to as "ligand-immobilized carrier W7."

Example 8

The procedure of Example 7 was repeated, except that the wire cloth having a mesh opening of 104 μm was changed to a wire cloth having a mesh opening of 115 μm (product of Taiyo Wire Cloth Co., Ltd.), to thereby yield a liquid containing an affinity chromatography filler. The filler contained in the liquid is referred to as "ligand-immobilized carrier W8."

Example 9

An agarose-base carrier Mabselect SuRe (product of Cytiva, mean volume diameter: 92 μm) was put into a SATO'S SYSTEM VIBRO SEPARATOR equipped with a wire cloth having a mesh opening of 54 μm (product of Taiyo Wire Cloth Co., Ltd.), and the residue over the sieve (i.e., the particles remaining on the sieve after a wet classification process) was recovered by use of pure water, to thereby yield a liquid containing an affinity chromatography filler. The filler contained in the liquid is referred to as "ligand-immobilized carrier W9."

Example 10

The procedure of Example 9 was repeated, except that the wire cloth having a mesh opening of 54 μm was changed to a wire cloth having a mesh opening of 62 μm (product of Taiyo Wire Cloth Co., Ltd.), to thereby yield a liquid containing an affinity chromatography filler. The filler contained in the liquid is referred to as "ligand-immobilized carrier W10."

Comparative Example 1

The procedures of steps (1) to (3) of Example 1 were repeated, to thereby yield "porous particles 2."

Subsequently, the same step as step (5) of Example 1 was carried out, to thereby yield a liquid containing an affinity chromatography filler. The filler contained in the liquid is referred to as "ligand-immobilized carrier Y1."

Comparative Example 2

The procedures of steps (1) to (3) of Example 1 were repeated, to thereby yield "porous particles 2." A dispersion of porous particles 2 was charged into a polymer-made bottle (1 L) and allowed to stand for 1 hour. Then, the supernatant was removed.

Subsequently, the same step as step (5) of Example 1 was carried out, to thereby yield a liquid containing an affinity chromatography filler. The filler contained in the liquid is referred to as "ligand-immobilized carrier Y2."

Comparative Example 3

The procedures of steps (1) to (4) of Example 1 were repeated, except that the wire cloth having a mesh opening of 77 μm was changed to a wire cloth having a mesh opening of 62 μm (product of Taiyo Wire Cloth Co., Ltd.) in step (4) of Example 1, and a subsequent classification operation by means of a SATO'S SYSTEM VIBRO SEPARATOR equipped with a wire cloth having a mesh opening of 32 μm (product of Taiyo Wire Cloth Co., Ltd.) was omitted, to thereby yield a porous particle dispersion.

Subsequently, the same step as step (5) of Example 1 was carried out, to thereby yield a liquid containing an affinity chromatography filler. The filler contained in the liquid is referred to as "ligand-immobilized carrier Y3."

Test Example 1: Determination of particle size and particle size distribution

The mean volume diameter of each of the matrices W1 to W10, and Y1 to Y3 obtained in the Examples and Comparative Examples was determined by means of a laser diffraction scattering particle size distribution measurement apparatus (MT3000II, product of MicrotracBEL Corp.) according to ISO 13320:2009. The carrier concentration of each measurement sample was tuned such that the transmittance of the sample was adjusted to 0.1%. The refractive index of water (solvent) and that of particles (carrier) were set to 1.333 and 1.50, respectively. Table 1 shows mean volume diameter measurements obtained by means of the laser diffraction scattering particle size distribution measurement apparatus.

Next, the d1, d5, and d50 values of volume particle size distribution of each of the matrices W1 to W10, and Y1 to Y3 obtained in the Examples and Comparative Examples were determined on the basis of ISO 13319:2007 by means of Multisizer 4e (product of Beckman Coulter). Since the particle size of porous particles as measured by the above apparatus is estimated as a smaller value, the mean volume diameter values actually measured by the apparatus were compensated with such a shape factor for converting to the mean volume diameter values as determined on the basis of ISO 13320:2009, to thereby calculate the d1, d5, and d50 values. Table 1 shows the measurements of d1, d5, and d50. Also, Fig. 1 shows a volume particle size distribution of carrier W1 (Example 1), Fig. 2 a volume particle size distribution of carrier W3 (Example 3), and Fig. 3 a volume particle size distribution of carrier W5 (Example 5).

In the Test Example, the particle size measurement on the basis of ISO 13319 employed an aperture of 200 μm, and ISOTON II (product of Beckman Coulter) was used as an electrolyte. The measurement was conducted with respect to 30,000 particles in total, with a histogram particle size bin of 400 at a current of 1,600 μA and gain 2.

The particle sizes d1, d5, and d50 are defined as follows.

d1 = particle size corresponding to 1% volume cumulative area of volume particle size distribution from the small particle size side

d5 = particle size corresponding to 5% volume cumulative area of volume particle size distribution from the small particle size side

d50 = particle size corresponding to 50% volume cumulative area of volume particle size distribution from the small particle size side

Also, coefficient of variation (CV value) and skewness were calculated from the measurements on the basis of ISO 13319. The calculation procedure is as follows.

CV value (%) = {(standard deviation of volume particle size distribution)/(mean volume diameter)}×100

[NF1]

$$Skewness = (n/(n-1) \times (n-2)) \times \sum_{i=1}^{n} (\frac{x_i - \bar{x}}{s})^3$$

[NF2]

$\bar{x}$ = *Mean volume diameter*

n = the total number of measurement data
$x_i$ = measured particle size of each particle
s = standard deviation of particle size

Test Example 2: liquid permeability evaluation

Two units of Hiscale 26/20 column (product of Cytiva) were connected together so that the inner diameter and filling height were adjusted to 26 mm and 200 mm, respectively. Into each of the thus-provided columns, each of the matrices W1 to W10, and Y1 to Y3 obtained in the Examples and Comparative Examples was charged. In each case, the thus-prepared column was connected to AKTA AVANT 150 (product of Cytiva). Subsequently, pure water was caused to pass through the column at a linear flow rate of 100 cm/hr for 30 minutes. The upper column was removed, and an adapter was attached to the carrier layer, whereby the column was packed with the carrier. Then, the linear flow rate was tuned so as to generate a back pressure of 0.25 MPa, and the value of the linear flow rate was recorded. Table 1 shows the results. The greater the linear flow rate, the more suitable the liquid permeability.

Test Example 3: evaluation of pressure-resistant characteristic during liquid passage

In a manner similar to that of Test Example 2, each of the matrices W1 to W10, and Y1 to Y3 obtained in the Examples and Comparative Examples was charged to the column. Then, pure water was caused to pass through the column at a linear flow rate of 800 cm/hr, and the back pressure and compressibility (i.e., percent change in filling height) were recorded. The compressibility was calculated by the following equation. Table 1 shows the results. The smaller the values of back pressure and compressibility, the more suitable the pressure-resistant characteristic.

(Compressibility) = 1-{(filling height after liquid passage at 800 cm/h)/(filling height before liquid passage at 800 cm/h)}

Test Example 4: dynamic binding capacity evaluation

DBC of each of the matrices W1 to W10, and Y2 and Y3 obtained in the Examples and Comparative Examples with respect to a protein (human IgG antibody, HGG-1000, product of Equitech Bio) was determined at a linear flow rate of 300 cm/hr by means of AKTAprime plus (product of GE Healthcare) . The column vessel employed had a capacity of 4 mL (5 mmϕ × 200 mm-length), and the protein sample was prepared by dissolving a protein of interest (5 mg/mL) in 20mM sodium phosphate/150mM sodium chloride aqueous solution (pH: 7.5). DBC was calculated from the amount of captured protein at 10% breakthrough at the elution top, and the column filling volume. Table 1 shows the results.

[Table 1]

| | | Ex 1 | Ex 2 | Ex 3 | Ex 4 | Ex 5 | Ex 6 | Ex 7 | Ex 8 | Ex 9 | Ex 10 | Comp 1 | Comp 2 | Comp 3 |
|---|---|---|---|---|---|---|---|---|---|---|---|---|---|---|
| Particles | Synthetic polymer | O | O | O | O | O | O | - | - | - | - | O | O | O |
| | Agarose | - | - | - | - | - | - | O | O | O | O | - | - | - |
| Opening | [1st Classification opening/(2a-d)×100]% | 145 | 145 | 145 | 145 | 145 | 145 | 113 | 125 | 59 | 67 | - | - | 117 |
| | [2nd Classification opening/(2a-d)×100] % | 60 | 64 | 72 | 81 | 85 | 102 | 67 | 67 | - | - | - | - | - |
| Physical properties | Vol. mean particle size μm (ISO 13320) | 55 | 56 | 58 | 59 | 61 | 65 | 85 | 90 | 92 | 95 | 51 | 53 | 50 |
| | Variation coeff. (%) | 20 | 18 | 16 | 15 | 12 | 11 | 14 | 16 | 20 | 18 | 25 | 23 | 20 |
| | Skewness | -0.003 | 0.05 | 0.3 | 0.5 | 2 | 2.5 | 0.1 | 0.2 | 0.1 | 0.3 | -0.361 | 0 | -0.88 |
| | d1 (μm) | 31.0 | 35.0 | 43.1 | 45.9 | 50.5 | 56.9 | 56.8 | 57.8 | 53.9 | 59.3 | 17.8 | 27.8 | 20.2 |
| | d5 (μm) | 38.0 | 41.5 | 46.1 | 48.2 | 53.4 | 59.4 | 63.5 | 64.0 | 58.8 | 65.1 | 28.2 | 35.2 | 30.1 |
| | d50 (μm) | 55.6 | 56.3 | 57.4 | 58.8 | 61.3 | 66.2 | 85.5 | 89.9 | 93.0 | 94.6 | 51.1 | 54.3 | 50.1 |
| | d1/d50 | 0.56 | 0.62 | 0.75 | 0.78 | 0.82 | 0.86 | 0.67 | 0.64 | 0.58 | 0.63 | 0.35 | 0.51 | 0.40 |
| | d5/d50 | 0.68 | 0.74 | 0.80 | 0.82 | 0.87 | 0.90 | 0.74 | 0.71 | 0.63 | 0.69 | 0.55 | 0.65 | 0.60 |
| Characteristi cs | Liq. permeability (cm/h) @0.25 MPa | 667 | 704 | 853 | 893 | 929 | 1,018 | 1,298 | 1,342 | 1,405 | 1,497 | 623 | 640 | 621 |
| | Back pressure (MPa) @800 cm/h | 0.31 | 0.26 | 0.18 | 0.17 | 0.16 | 0.13 | 0.13 | 0.12 | 0.10 | 0.09 | 0.34 | 0.33 | 0.39 |
| | Compressibility @800 cm/h | 0.22 | 0.21 | 0.19 | 0.19 | 0.19 | 0.17 | 0.08 | 0.07 | 0.06 | 0.05 | 0.24 | 0.23 | 0.25 |
| | DBC (dynamic binding capacity) mg/mL | 63 | 62 | 60 | 60 | 59 | 55 | 47 | 43 | 40 | 40 | - | 63 | 63 |

## Claims

1. A method for producing a chromatography carrier, the method comprising the following steps 1 and 2:

   (step 1) a step of providing a solid phase support, wherein the solid phase support provided in step 1 is formed of porous particles on which a ligand has or has not been immobilized; and
   (step 2) a step of subjecting the solid phase support to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

2. A method for producing a chromatography carrier, the method comprising the following steps 1 and 2:

   (step 1) a step of providing a solid phase support, wherein the solid phase support provided in step 1 is formed of porous particles on which a ligand has been immobilized; and
   (step 2) a step of subjecting the solid phase support to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

3. A method for producing a chromatography carrier, the method comprising the following steps 1 and 2:

   (step 1) a step of providing a solid phase support, wherein the solid phase support provided in step 1 is formed of porous particles on which a ligand has not been immobilized; and
   (step 2) a step of subjecting the solid phase support to sieve classification, wherein the coefficient of variation of the volume particle size distribution of the porous particles when a ligand has been immobilized is adjusted to 1% to 22%, and the ratio (d1/d50) of volume cumulative 1% particle size d1 to volume cumulative 50% particle size d50 in terms of the porous particles is adjusted to 0.55 to 1.0.

4. A chromatography carrier production method according to claim 3,
   which further includes (step 3): a step of immobilizing a ligand onto the porous particles which have undergone sieve classification in step 2.

5. A chromatography carrier production method according to any one of claims 1 to 4, wherein the sieve classification of step 2 includes (step 2a): a step of performing the sieve classification by means of a sieve having a mesh opening of 10% or greater and smaller than 200%, with respect to the mean volume diameter of the solid phase support before sieve classification (2a-d) as 100%, to thereby recover the residue over the sieve; and (step 2b): a step of performing sieve classification of the residue by means of a sieve having a mesh opening greater than that of the sieve of step 2a and smaller than 600% of the particle size (2a-d), to thereby recover a matter having passed through the sieve, wherein step 2a and step 2b are performed in that order or in reverse order.

6. A chromatography carrier production method according to any one of claims 1 to 5,
   wherein the sieve classification of step 2 is a wet process.

7. A chromatography carrier production method according to any one of claims 1 to 6,
   wherein the coefficient of variation is 5% to 20%, and the ratio (d1/d50) is 0.60 to 0.95.

8. A chromatography carrier production method according to any one of claims 1 to 7,
   wherein step 1 includes a step of dispersing a monomer composition in an aqueous medium and conducting suspension polymerization.

9. A method for producing a chromatography column, the method comprising a step of charging a carrier into a column vessel,
   wherein the carrier is formed of porous particles onto which a ligand has been immobilized; and the carrier has a coefficient of variation of the volume particle size distribution of 1% to 22% and a ratio (d1/d50) of volume cumulative 1% particle size d1 to volume cumulative 50% particle size d50 of 0.55 to 1.0.

10. A chromatography carrier, which is dispersed in a dispersion medium,

wherein the carrier is formed of porous particles onto which a ligand has been immobilized; and the carrier has a coefficient of variation of the volume particle size distribution of 1% to 22% and a ratio (d1/d50) of volume cumulative 1% particle size d1 to volume cumulative 50% particle size d50 of 0.55 to 1.0.

**11.** A chromatography carrier according to claim 10,
wherein the carrier has a volume cumulative 50% particle size d50 of 55 μm to 100 μm.

**12.** A chromatography carrier according to claim 10 or 11,
wherein the carrier has a volume cumulative 1% particle size d1 of 30 μm to 75 μm.

Fig. 1

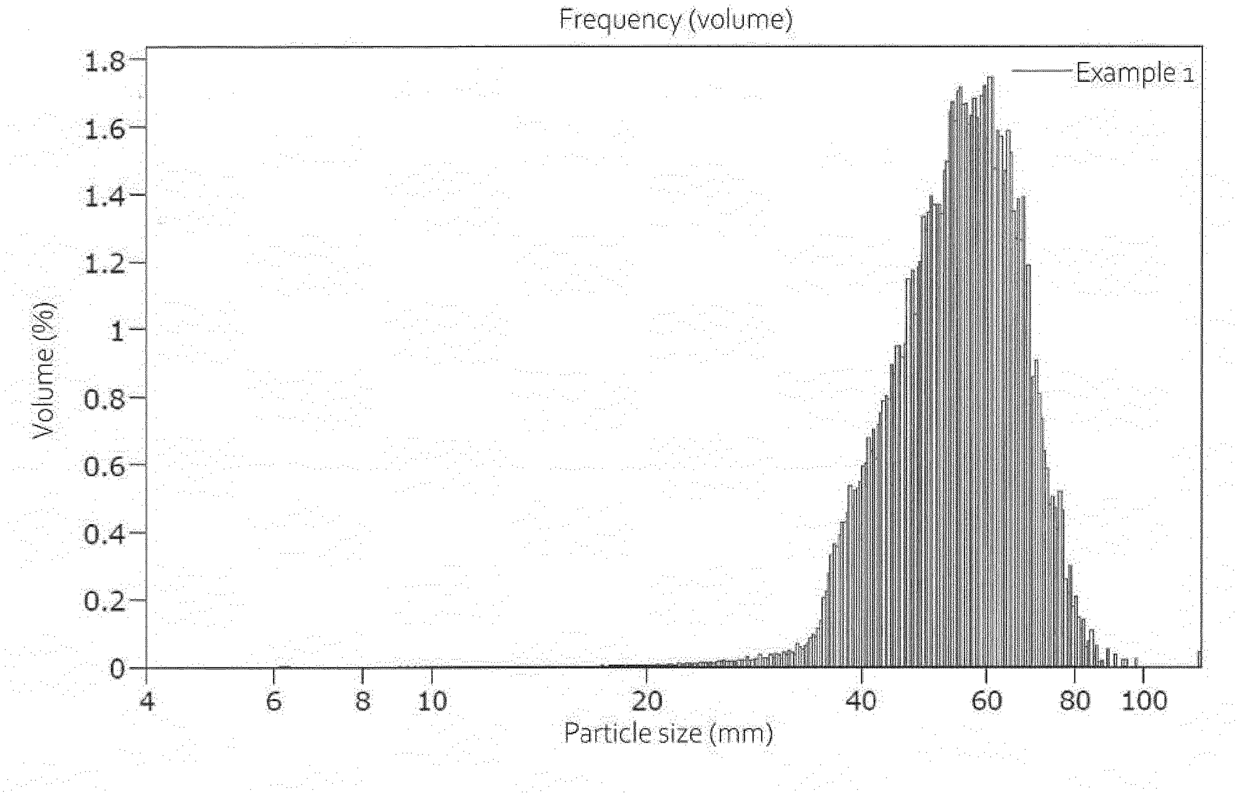
Frequency (volume)
Example 1
Volume (%)
1.8
1.6
1.4
1.2
1
0.8
0.6
0.4
0.2
0
4
6
8
10
20
40
60
80
100
Particle size (mm)

Fig. 2

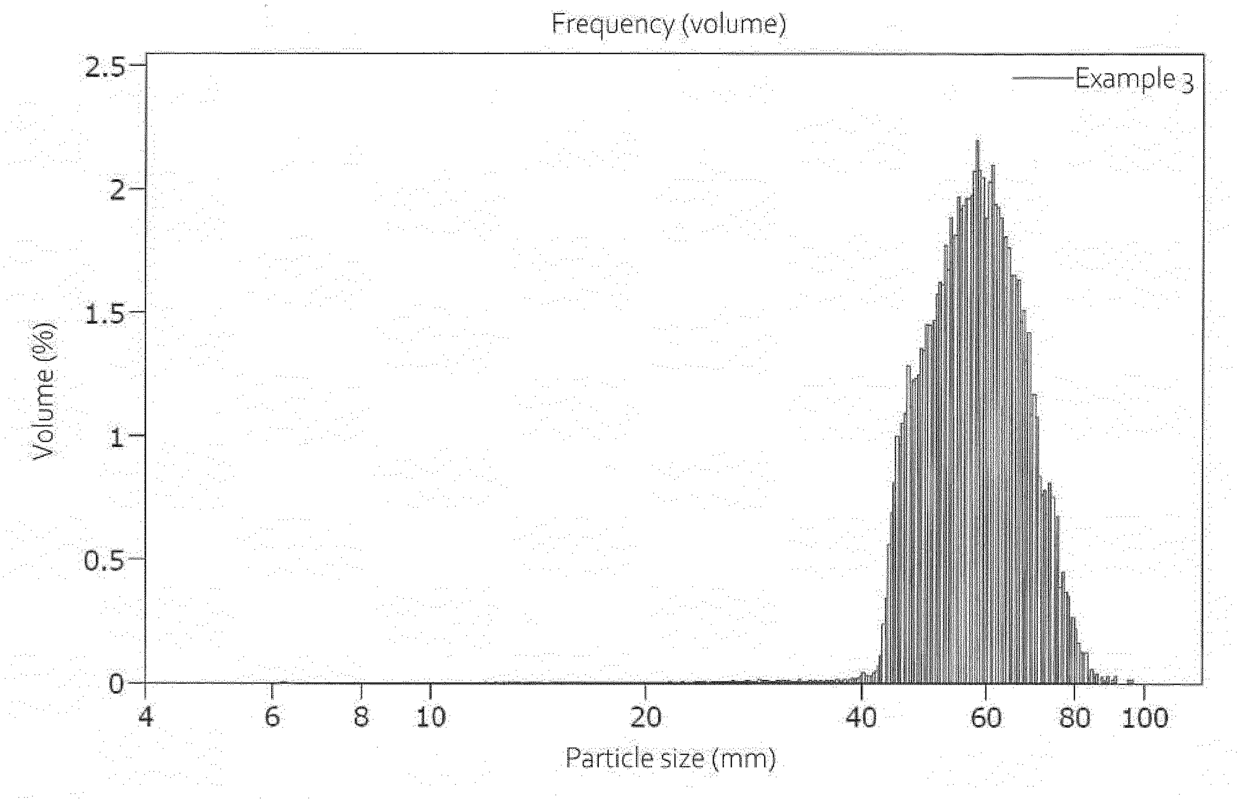
Frequency (volume)
Example 3
Volume (%)
2.5
2
1.5
1
0.5
0
4
6
8
10
20
40
60
80
100
Particle size (mm)

Fig. 3

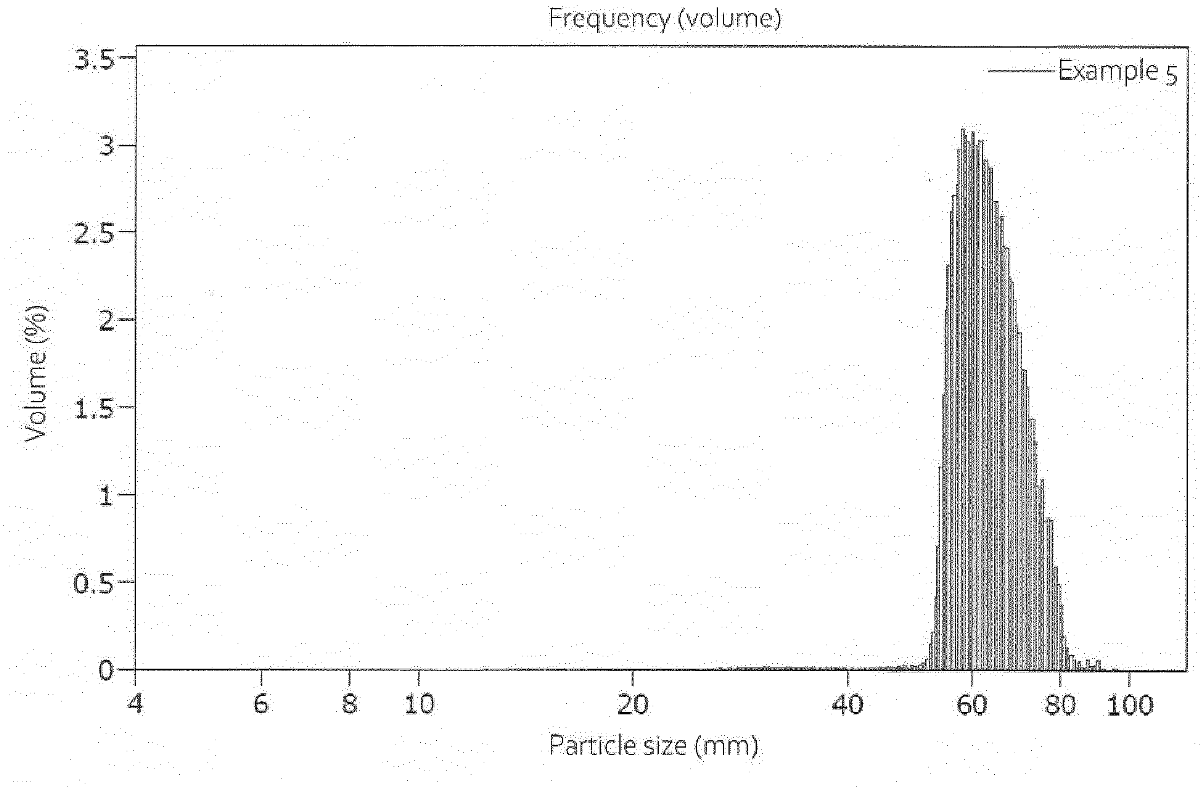
Frequency (volume)
Example 5
Volume (%)
3.5
3
2.5
2
1.5
1
0.5
0
4
6
8
10
20
40
60
80
100
Particle size (mm)

**INTERNATIONAL SEARCH REPORT**

International application No. **PCT/JP2022/011495**

**A. CLASSIFICATION OF SUBJECT MATTER**

***B01D 15/38***(2006.01)i; ***B01J 20/281***(2006.01)i; ***B01J 20/285***(2006.01)i
FI: B01J20/281 X; B01J20/281 G; B01J20/281 R; B01J20/285 S; B01D15/38

According to International Patent Classification (IPC) or to both national classification and IPC

**B. FIELDS SEARCHED**

Minimum documentation searched (classification system followed by classification symbols)

B01D15/38; B01J20/281; B01J20/285

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-037069 A (MITSUBISHI CHEM CORP) 16 February 2017 (2017-02-16) paragraphs [0082], [0088]-[0095] | 1-12 |
| Y | WO 2017/204292 A1 (SHOWA DENKO KK) 30 November 2017 (2017-11-30) claims 1-2, paragraphs [0027]-[0033], [0054]-[0055], table 1 | 1-12 |
| Y | JP 2021-030181 A (SHOWA DENKO MAT CO LTD) 01 March 2021 (2021-03-01) paragraph [0014] | 1-12 |
| Y | JP 2017-211352 A (HITACHI CHEMICAL TECHNO SERVICE CO LTD) 30 November 2017 (2017-11-30) paragraphs [0058], [0075]-[0076] | 1-12 |
| Y | JP 2017-125815 A (HITACHI CHEMICAL CO LTD) 20 July 2017 (2017-07-20) paragraph [0038] | 1-12 |
| Y | WO 2020/096056 A1 (HITACHI CHEMICAL TECHNO SERVICE CO LTD) 14 May 2020 (2020-05-14) paragraphs [0066], [0090] | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 May 2022** | **31 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/011495**

**C. DOCUMENTS CONSIDERED TO BE RELEVANT**

| Category* | Citation of document, with indication, where appropriate, of the relevant passages | Relevant to claim No. |
|---|---|---|
| A | JP 2001-002716 A (TOSOH CORP) 09 January 2001 (2001-01-09) claims 1, 13-14, examples 1-8, fig. 1-7 | 1-12 |
| A | JP 2020-504776 A (PUROLITE (CHINA) CO., LTD.) 13 February 2020 (2020-02-13) claims, fig. 1-6 | 1-12 |
| A | US 2012/0145623 A1 (LINFORD, Matthew R.) 14 June 2012 (2012-06-14) paragraph [0167], fig. 18A-18C | 1-12 |
| A | US 2010/0206797 A1 (CHEN, Wu) 19 August 2010 (2010-08-19) claims, figures | 1-12 |

**INTERNATIONAL SEARCH REPORT**
**Information on patent family members**

International application No.
**PCT/JP2022/011495**

| Patent document cited in search report | Publication date (day/month/year) | Patent family member(s) | Publication date (day/month/year) |
|---|---|---|---|
| JP 2017-037069 A | 16 February 2017 | (Family: none) | |
| WO 2017/204292 A1 | 30 November 2017 | US 2019/0204278 A1<br>claims 1-2, paragraphs [0046]-[0062], [0096], table 1<br>EP 3467494 A1<br>CN 109154587 A | |
| JP 2021-030181 A | 01 March 2021 | (Family: none) | |
| JP 2017-211352 A | 30 November 2017 | (Family: none) | |
| JP 2017-125815 A | 20 July 2017 | (Family: none) | |
| WO 2020/096056 A1 | 14 May 2020 | (Family: none) | |
| JP 2001-002716 A | 09 January 2001 | US 6855761 B2<br>claims 1, 13-14, examples 1-8, fig. 1-7<br>EP 1046658 A1 | |
| JP 2020-504776 A | 13 February 2020 | US 2018/0171484 A1<br>claims, figures<br>WO 2018/109149 A1<br>CN 108203514 A<br>KR 10-2019-0097073 A | |
| US 2012/0145623 A1 | 14 June 2012 | WO 2012/068144 A1 | |
| US 2010/0206797 A1 | 19 August 2010 | EP 2218500 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019039545 A
- JP 2016507729 A
- WO 2015119255 A
- WO 2015041218 A
- US 6399750 B
- US 5260373 A
- JP 2010133733 A
- JP 2010133734 A
- JP 2011256176 A


### Non-patent literature cited in the description


- **LJUNGQUIST C. et al.** *Eur. J. Biochem.,* 1989, vol. 186, 557-561